# EUROPÄISCHE PATENTANMELDUNG

(11) **EP 4 574 417 A1**
(43) Veröffentlichungstag der Anmeldung: **25.06.2025**
(21) Anmeldenummer: 23218435.8
(22) Anmeldetag: 20.12.2023
(51) Int. Cl.: B32B 7/12, B32B 21/06, B32B 37/12, B32B 37/14, B32B 15/20

(54) **VERFAHREN ZUR HERSTELLUNG EINER WABENPLATTE**

(71) Anmelder: Henkel AG & Co. KGaA, 40589 Düsseldorf (DE)
(72) Erfinder: MAILAENDER, Sebastian, 33098 Paderborn (DE)
(74) Vertreter: Patentanwälte Bauer Vorberg Kayser

(57) **Zusammenfassung**

Die Erfindung betrifft ein Verfahren zur Herstellung einer Wabenplatte, wobei die Wabenplatte eine erste Deckschicht (1) und eine zweite Deckschicht (2) sowie ein zwischen der ersten Deckschicht (1) und der zweiten Deckschicht (2) angeordnetes Kernelement (3) umfasst, wobei das Kernelement (3) eine Wabenstruktur mit von Stegen (4) begrenzten Zellen (5) aufweist und wobei das Kernelement (3) eine erste Oberfläche (6) aufweist, die an der ersten Deckschicht (1) anliegt und eine zweite Oberfläche (7) aufweist, die an der zweiten Deckschicht (2) anliegt, umfassend die folgenden Schritte:
i) Bereitstellen des Kernelements (3) sowie der ersten und der zweiten Deckschicht (1, 2);
ii) Aufsprühen eines Heißschmelzklebstoffs (8) auf mindestens eine Oberfläche (6, 7) des Kernelements (3), wobei der Heißschmelzklebstoff (8) während des Aufsprühens verstreckt wird, so dass sich eine netzartige Klebstoffstruktur (9) auf der mindestens einen Oberfläche (6, 7) des Kernelements (3) ausbildet;
iii) Erwärmen der mindestens einen mit Heißschmelzklebstoff (8) versehenen Oberfläche (6, 7) des Kernelements (3) und dadurch Reaktivieren des Heißschmelzklebstoffs (8);
iv) Aufdrücken einer Deckschicht (1, 2) auf die mindestens eine mit Heißschmelzklebstoff (8) versehene Oberfläche (6, 7) des Kernelements (3);
v) gegebenenfalls Ausführen der Verfahrensschritte ii) bis iv) für die zweite Oberfläche (7) des Kernelements (3) und die zweite Deckschicht (2), so dass das Kernelement (3) zwischen den beiden Deckschichten (1, 2) angeordnet ist.

## Beschreibung

Die Erfindung betrifft ein Verfahren zur Herstellung einer Wabenplatte.

Als Sandwichplatte mit Wabenkern, kurz Wabenplatte, bezeichnet man eine meist dreischichtige Verbundkonstruktion, bei der zwischen zwei äußeren Deckschichten ein Kernelement angeordnet ist, welches eine durch eine Vielzahl von Stegen ausgebildete Wabenstruktur mit in der Regel sechseckigen Zellen aufweist. Derartige Wabenplatten können beispielsweise vollständig aus Materialien auf Basis von Papier gefertigt sein, sie können jedoch auch Kunststoffe oder Aluminium umfassen. Insbesondere können die Deckschichten auch aus einem anderen Material gefertigt sein als das Kernelement. Beispielsweise können die Deckschichten als dünne Holzplatten ausgebildet sein, während das Kernelement aus Papier oder Pappe gebildet ist.

Aufgrund ihres speziellen Aufbaus weisen Wabenplatten eine hohe mechanische Steifigkeit bei gleichzeitig geringem Gewicht auf. Sie eignen sich daher in besonderer Weise für den Einsatz in der Möbelindustrie, sie werden aber beispielsweise auch im Flugzeug-, Schiffs- und Automobilbau oder als Fassadenelemente eingesetzt.

Die Herstellung derartiger Wabenplatten erfolgt in der Regel durch Verkleben des Kernelements mit den Deckschichten. Dabei wird ein geeigneter Klebstoff, beispielsweise in flüssiger Form als Polyurethan- oder Dispersionsklebstoff oder als aufschmelzbare Folie, vollflächig auf die Deckschichten aufgebracht und das Kernelement wird zwischen den Deckschichten eingelegt. Um eine gute Haftung zwischen Kernelement und Deckschichten zu erzielen, ist es erforderlich, den Verbund während des Trocknungsvorgangs über einen längeren Zeitraum zusammenzupressen.

Es ist ein Nachteil des gleichmäßigen und vollflächigen Klebstoffauftrags, dass in den Öffnungsbereichen der Zellen ein Großteil des Klebstoffes ungenutzt auf den Deckschichten verbleibt, da die Verbindung zwischen Deckschichten und Kernelement lediglich im Bereich der die Wabenstruktur ausbildenden Stege erfolgt. Gleichzeitig bilden die Stege lediglich sehr schmale Kontaktbereiche.

Die DE 10 2006 060 940 B4 beschreibt eine Weiterbildung eines solchen Verfahrens zur Herstellung einer Leichtbauplatte. Hierbei wird ein Klebstoff zunächst vollflächig oder in Form von Tröpfchen und/oder Streifen auf die Oberfläche einer Deckschicht aufgebracht und das Kernelement sodann auf die mit Klebstoff versehene Deckschicht aufgelegt. Um den aufgebrachten Klebstoff so zu verteilen, dass er weniger in den Öffnungsbereichen der Zellen und in höherem Maße im Bereich der Stege des Kernelements zu liegen kommt, schlägt die DE 10 2006 060 940 B4 das Ausführen einer Relativbewegung zwischen der mit Klebemittel versehenen Deckschicht und dem aufgelegten Kernelement vor. Bei der Relativbewegung kann es sich beispielsweise um eine Translationsbewegung oder um eine Rotationsbewegung oder um eine Kombination aus einer Translations- und einer Rotationsbewegung handeln. In jedem Fall wird durch die reibende Relativbewegung ein gewisser Anteil des flüssigen Klebstoffs so umverteilt, dass er sich vornehmlich im Bereich der Stege des Kernelements konzentriert, wodurch eine verbesserte Haftung zwischen dem Kernelement und der Decklage bewirkt wird.

Dieses Verfahren ist jedoch vergleichsweise aufwändig. Zudem verbleiben nach wie vor Klebstoffanteile in Bereichen der Deckschicht, in denen keine Stege des Kernelements zu liegen kommen, so dass diese Klebstoffanteile nicht zu der Verbindung beitragen. Im Sinne eines ressourcenschonenden Umgangs mit Werkstoffen wird dies als verbesserungswürdig angesehen.

Die vorliegende Erfindung hat sich daher die Aufgabe gestellt, ein effizientes Verfahren zur Herstellung einer Wabenplatte anzugeben, welches mit einem geringeren Verbrauch an Klebstoff einhergeht und gleichzeitig eine besonders gute Verbindung zwischen dem Kernelement und den beiden Deckschichten schafft.

Diese Aufgabe wird gelöst durch ein Verfahren mit den Merkmalen des Patentanspruchs 1.

Vorteilhafte Ausgestaltungen und Weiterbildungen der Erfindung sind Gegenstand der abhängigen Ansprüche.

Gemäß Patentanspruch 1 betrifft die Erfindung ein Verfahren zur Herstellung einer Wabenplatte, wobei die Wabenplatte eine erste Deckschicht und eine zweite Deckschicht sowie ein zwischen der ersten Deckschicht und der zweiten Deckschicht angeordnetes Kernelement umfasst, wobei das Kernelement eine Wabenstruktur mit von Stegen begrenzten Zellen aufweist und wobei das Kernelement eine erste Oberfläche aufweist, die an der ersten Deckschicht anliegt und eine zweite Oberfläche aufweist, die an der zweiten Deckschicht anliegt, umfassend die folgenden Schritte:
i) Bereitstellen des Kernelements sowie der ersten und der zweiten Deckschicht;
ii) Aufsprühen eines Heißschmelzklebstoffs auf mindestens eine Oberfläche des Kernelements, wobei der Heißschmelzklebstoff während des Aufsprühens verstreckt wird, so dass sich eine netzartige Klebstoffstruktur auf der mindestens einen Oberfläche des Kernelements ausbildet;
iii) Erwärmen der mindestens einen mit Heißschmelzklebstoff versehenen Oberfläche des Kernelements und dadurch Reaktivieren des Heißschmelzklebstoffs;
iv) Aufdrücken einer Deckschicht auf die mindestens eine mit Heißschmelzklebstoff versehene Oberfläche des Kernelements;
v) gegebenenfalls Ausführen der Verfahrensschritte ii) bis iv) für die zweite Oberfläche des Kernelements und die zweite Deckschicht, so dass das Kernelement zwischen den beiden Deckschichten angeordnet ist.

Mit anderen Worten sieht die Erfindung vor, dass der Klebstoffauftrag nicht, wie aus dem Stand der Technik bekannt, auf die Deckschichten erfolgt, sondern dass die Oberflächen des Kernelements mit Klebstoff versehen werden. Das erfindungsgemäße Verfahren schlägt hierzu vor, einen Heißschmelzklebstoff auf mindestens eine Oberfläche des Kernelements aufzusprühen, wobei der Heißschmelzklebstoff während des Aufsprühens verstreckt wird, so dass sich eine netzartige Klebstoffstruktur auf der mindestens einen Oberfläche des Kernelements ausbildet. Das Verstrecken des Klebstoffs kann durch Verwendung einer speziellen Düse erreicht werden, durch die der Klebstoff kontaktlos und unter Druck auf die Oberfläche des Kernelements aufgesprüht wird. Die auf diese Weise entstehenden Klebstofffäden legen sich in einer netzartigen Struktur auf die Oberfläche des Kernelements, d.h. sie liegen auf den Stegen auf und überspannen die Öffnungsbereiche der Zellen.

Durch das in einem nachfolgenden Verfahrensschritt erfindungsgemäß vorgesehene Erwärmen der mindestens einen mit Heißschmelzklebstoff versehenen Oberfläche des Kernelements wird der vorverstreckte Heißschmelzklebstoff reaktiviert. Dabei macht sich die Erfindung die Erkenntnis zu Nutze, dass sich die von dem Klebstoff erzeugte Netzstruktur im Zuge der Reaktivierung auflöst und der Klebstoff sich zu den Stegen der Wabenstruktur hin zurückzieht. In der Folge befindet sich somit kein Klebstoff mehr in den Öffnungsbereichen der Zellen, vielmehr konzentriert sich der Klebstoff ausschließlich im Bereich der Stege der Wabenstruktur. Dabei legt sich der Klebstoff auch an seitliche Bereiche der Stege an, so dass beim nachfolgenden Auflegen bzw. Aufdrücken einer Deckschicht auf das Kernelement durch die besonders hohe Klebstoffkonzentration im Bereich der Stege eine besonders gute Verbindung zwischen der Deckschicht und dem Kernelement hergestellt werden kann. Das Aufdrücken der Deckschicht muss dabei innerhalb der offenen Zeit des Heißschmelzklebstoffs erfolgen. Als offene Zeit bezeichnet man die Zeitspanne, innerhalb derer ein Klebstoff eine Klebeverbindung eingehen kann, bevor er sich anschließend wieder verfestigt. Durch das erfindungsgemäße Verfahren kann somit auf einfache Weise eine lokale Klebstoffkonzentration genau in den Bereichen der Wabenstruktur bereitgestellt werden, die auch tatsächlich zu der Verbindung beitragen. Untersuchungen an mit Hilfe des erfindungsgemäßen Verfahrens hergestellten Wabenplatten zeigen, dass der Klebstoff auch nach dem Zusammenfügen von Kernelement und Deckschichten im Bereich der Stege verbleibt und diese gewissermaßen einfasst, so dass gegenüber herkömmlichen Fügeverfahren größere Kontaktbereiche zwischen Kernelement und Deckschichten ausgebildet werden.

Da keine Klebstoffanteile ungenutzt in den Öffnungsbereichen der Zellen verbleiben, kann die aufgetragene Klebstoffmenge gegenüber aus dem Stand der Technik bekannten Verfahren insgesamt reduziert werden. Dies macht das erfindungsgemäße Verfahren besonders ressourcenschonend. Gleichzeitig weist der Heißschmelzklebstoff gegenüber flüssig aufgetragenen, wasserbasierten Klebstoffen den Vorteil einer innerhalb weniger Sekunden ausgebildeten Handlings-Festigkeit auf, da die Wärme über die Deckschicht sehr schnell abgeleitet wird. Auf ansonsten erforderliche energie- und zeitaufwendige Trocknungsverfahren kann somit verzichtet werden und das ausgebildete Bauteil kann unmittelbar weiterverarbeitet werden.

Grundsätzlich kann bei dem erfindungsgemäßen Verfahren zunächst lediglich die erste Oberfläche des Kernelements in oben beschriebener Weise mit Heißschmelzklebstoff versehen werden. Diese kann nachfolgend erwärmt werden und es kann die erste Deckschicht aufgedrückt werden. Im Anschluss können die genannten Verfahrensschritte für die zweite Oberfläche des Kernelements und die zweite Deckschicht analog durchgeführt werden. Alternativ können auch die erste und die zweite Oberfläche des Kernelements gleichzeitig oder unmittelbar nacheinander mit Heißschmelzklebstoff versehen werden. Nachfolgend können beide Oberflächen gleichzeitig oder unmittelbar nacheinander erwärmt werden und es kann die erste Deckschicht auf die erste Oberfläche und die zweite Deckschicht auf die zweite Oberfläche des Kernelements aufgedrückt werden. Zwischen dem Verfahrensschritt des Aufsprühens des Klebstoffs und dem des Reaktivierens des Klebstoffs durch Erwärmen kann grundsätzlich ein gewisser Zeitraum liegen, in dem die erstarrte Klebstoff-Netzstruktur auf der Wabenplatte verbleibt. Dieser Zeitraum kann von wenigen Sekunden bis zu mehreren Stunden betragen.

Das Aufsprühen des Heißschmelzklebstoffs auf die Oberflächen des Kernelements kann gemäß einer bevorzugten Ausführung der Erfindung durch Spinsprühen mit Hilfe einer druckluftbetriebenen Spiraldüse erfolgen. Bei dieser wird der Klebstoff durch eine zentrale Düse ausgetrieben, wobei um die Düse herum zusätzlich druckluftführende Kanäle spiralförmig angeordnet sind. Durch das Einblasen von Luft wird der Klebstoff verstreckt und die austretenden Klebstofffäden werden in Rotation versetzt. Die Klebstofffäden fangen sich auf den Stegen und legen sich spinnennetzartig über die gesamte Wabenstruktur des Kernelements. Grundsätzlich können auch andere Düsen verwendet werden, die es erlauben, den Heißschmelzklebstoff kontaktlos und verstreckt auf das Kernelement aufzubringen.

Dabei kann es vorgesehen sein, dass der Heißschmelzklebstoff unter einem Winkel α von 30° bis 60° bezüglich der Oberfläche des Kernelements aufgesprüht wird. Beispielsweise kann der Heißschmelzklebstoff unter einem Winkel von etwa 45° bezüglich der Oberfläche des Kernelements aufgesprüht werden.

Als Heißschmelzklebstoff kann beispielsweise ein thermoplastischer Heißschmelzklebstoff verwendet werden. Alternativ kann auch ein reaktiver Heißschmelzklebstoff zum Einsatz kommen. Bei Verwendung eines reaktiven Heißschmelzklebstoffs kann die Reaktivierung des erstarrten Klebstoffs durch Heißdampf erfolgen. Hierdurch kann die nachfolgende Vernetzung zusätzlich beschleunigt werden. Reaktive Heißschmelzklebstoffe auf Polyurethanbasis reagieren nach ihrem Auftrag mit Luftfeuchtigkeit aus der Umgebung, wodurch derartige Verbindungen eine höhere Wärmebeständigkeit besitzen, da sie nicht wieder aufschmelzen. Durch das Einbringen von Feuchtigkeit bei der Reaktivierung des Klebstoffs kann dies beschleunigt werden.

Je nach verwendetem Heißschmelzklebstoff kann die Auftragstemperatur des Klebstoffs in einem Bereich zwischen etwa 120°C und 210°C liegen. Grundsätzlich haben Heißschmelzklebstoffe die Eigenschaft, sich nach dem Auftrag beim Abkühlen unmittelbar zu verfestigen. Es entsteht somit auf der Oberfläche des Kernelements ein erstarrtes Klebstoffnetz, welches grundsätzlich auch für einen längeren Zeitraum, beispielsweise für mehrere Stunden, dort verbleiben kann, bevor nachfolgende Verfahrensschritte ausgeführt werden.

Eine Ausführung der Erfindung sieht vor, dass das Erwärmen der mindestens einen mit Klebstoff versehenen Oberfläche des Kernelements durch Heißluft und/oder durch Heißdampf und/oder durch Infrarotstrahlung erfolgt. Im Allgemeinen ist es erforderlich, den vorverstreckten Heißschmelzklebstoff über seinen Erweichungspunkt zu erwärmen, um die gewünschte Reaktivierung in Gang zu setzen. Dies kann in hervorragender Weise durch den Einsatz von Heißluft und/oder Heißdampf und/oder Infrarotstrahlung bewirkt werden. Die Verwendung von Infrarotstrahlung ist insbesondere dann besonders vorteilhaft, wenn der Heißschmelzklebstoff eine Beimischung eines infrarot-reaktiven Zusatzes umfasst. Hierdurch können Reaktionszeiten noch weiter verkürzt werden.

Eine Ausgestaltung der Erfindung sieht vor, dass der Heißschmelzklebstoff mit einem Flächengewicht von 30 bis 90 g/m² auf das Kernelement aufgesprüht wird. Beispielsweise kann der Heißschmelzklebstoff mit einem Flächengewicht von 60 g/m² auf das Kernelement aufgesprüht werden. Es hat sich gezeigt, dass eine solche Menge an Klebstoff bei Anwendung des erfindungsgemäßen Verfahrens ausreichend ist, um die gewünschte Festigkeit der Verbindung zu erreichen. Im Gegensatz dazu werden bei aus dem Stand der Technik bekannten Verfahren, bei denen ein Dispersionsklebstoff vollflächig oder zumindest streifenförmig auf die Deckschichten aufgebracht wird, Klebstoffmengen von 120 g/m² und mehr benötigt, um eine zuverlässige Verbindung zu erreichen. Bei Wabenplatten aus Aluminium ist der Klebstoffverbrauch bei aus dem Stand der Technik bekannten Verfahren sogar noch höher; hier werden in der Regel flüssige Polyurethanklebstoffe mit einem Flächengewicht von etwa 250 g/m² auf die Deckschichten aufgebracht. Da durch das erfindungsgemäße Verfahren eine lokale Klebstoffkonzentration genau in den Bereichen der Wabenstruktur bereitgestellt werden kann, die auch tatsächlich zu der Verbindung beitragen, können die Auftragsmengen an Klebstoff deutlich reduziert werden.

Gemäß einer Ausgestaltung umfasst das Kernelement ein Material auf Basis von Papier. Beispielsweise kann das Kernelement aus einer dünnen Pappe gefertigt sein. Die Deckschichten können ebenfalls aus einem Material auf Basis von Papier gefertigt sein. Sie können jedoch beispielsweise auch aus Holz ausgebildet sein, etwa als MDF-Platte. Derartige Wabenplatten eignen sich besonders für den Einsatz im Möbelbau und im Innenausbau.

Alternativ kann das Kernelement ein Material auf Basis von Aluminium umfassen. Dabei können auch die Deckschichten als Aluminiumbleche ausgebildet sein. Bevorzugte Einsatzbereiche für aus Aluminium ausgebildete Wabenplatten stellen insbesondere das Bauwesen, das Transportwesen und der Schiffsbau dar.

Grundsätzlich ist bei der Ausbildung der Wabenplatten eine Vielzahl von Materialkombinationen möglich und das erfindungsgemäße Verfahren eignet sich unabhängig von den konkreten Materialien für eine effiziente und ressourcenschonende Herstellung derartiger Wabenplatten.

Im Folgenden wird die Erfindung anhand eines Ausführungsbeispiels und unter Bezugnahme auf die beigefügten Zeichnungen näher erläutert. Es zeigen:
- Figur 1:: den Verfahrensschritt des Aufsprühens eines Heißschmelzklebstoffs auf eine Oberfläche des Kernelements;
- Figur 2:: eine netzartige Klebstoffstruktur, die sich auf der Oberfläche des Kernelements ausgebildet hat;
- Figur 3:: den Verfahrensschritt des Erwärmens der mit Klebstoff versehenen Oberfläche des Kernelements;
- Figur 4:: den Verfahrensschritt des Aufdrückens der Deckschicht auf die mit Klebstoff versehene Oberfläche des Kernelements in;
- Figur 5:: eine mit dem erfindungsgemäßen Verfahren hergestellte Wabenplatte in einer Schnittdarstellung.

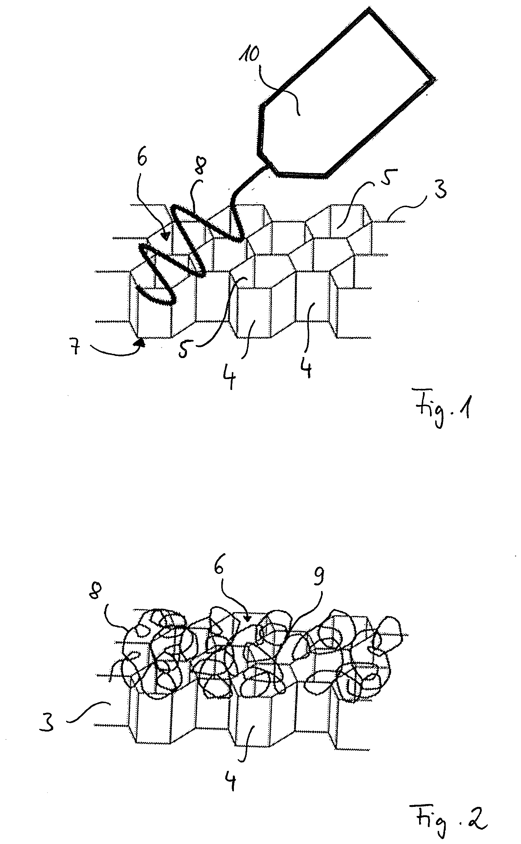

In einem ersten Verfahrensschritt werden ein Kernelement 3 sowie eine erste Deckschicht 1 und eine zweite Deckschicht 2 bereitgestellt. In Figur 1 ist ein Kernelement 3 dargestellt, welches aus einem Material auf Basis von Papier gefertigt ist; die beiden Deckschichten 1, 2 sind in Figur 1 nicht dargestellt. Das Kernelement 3 weist eine Wabenstruktur mit von Stegen 4 begrenzten sechseckigen Zellen 5 auf. In der Darstellung der Figur 1 ist eine erste Oberfläche 6 des Kernelements 3 nach oben ausgerichtet, während eine zweite Oberfläche 7 des Kernelements nach unten ausgerichtet ist.

Figur 1 zeigt den Verfahrensschritt des Aufsprühens eine Heißschmelzklebstoffs 8 auf die erste Oberfläche 6 des Kernelements 3. Bei dem Heißschmelzklebstoff 8 handelt es sich um einen reaktiven Heißschmelzklebstoff. Der Heißschmelzklebstoff 8 wird unter einem Winkel α von etwa 45° bezüglich der Oberfläche 6 des Kernelements 3 mit Hilfe einer lediglich schematisch dargestellten druckluftbetriebenen Spiraldüse 10 aufgesprüht. Bei dieser wird der Heißschmelzklebstoff durch eine zentrale Düse ausgetrieben, wobei um die Düse herum druckluftführende Kanäle spiralförmig angeordnet sind. Durch das Einblasen von Luft wird der Klebstoff verstreckt und die austretenden Klebstofffäden werden in Rotation versetzt. Die Klebstofffäden fangen sich auf den Stegen 4 der Wabenstruktur und legen sich über die Öffnungsbereiche der Zellen 5. Die Düse 10 wird so über die Oberfläche 6 des Kernelements 3 geführt, dass sich eine dichte netzartige Klebstoffstruktur 9 auf der ersten Oberfläche 6 des Kernelements 3 ausbildet Dieser Zustand ist in Figur 2 dargestellt. Der Heißschmelzklebstoff 8 wird mit einem Flächengewicht von etwa 60 g/m² aufgetragen.

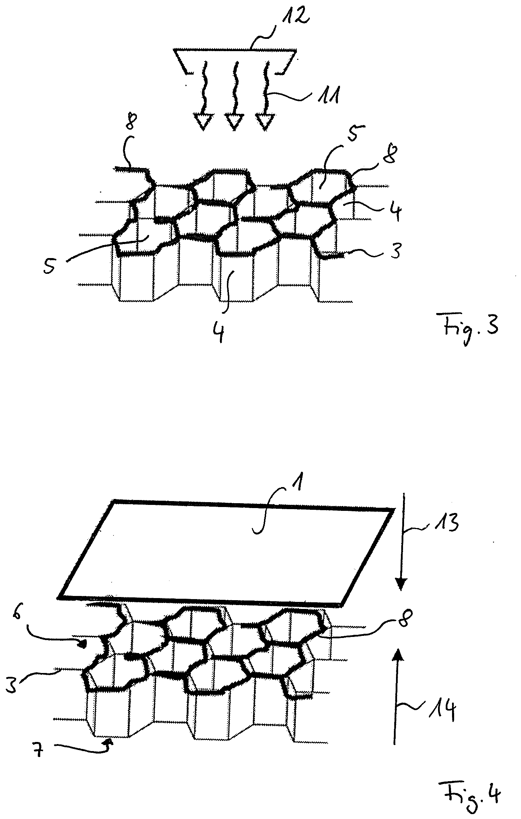

In einem nachfolgenden und in Figur 3 schematisch dargestellten Verfahrensschritt wird die mit Heißschmelzklebstoff 8 versehene erste Oberfläche 6 des Kernelement 3 erwärmt. Die Erwärmung erfolgt hier mit Hilfe von Heißluft 11 aus einer Heißluftquelle 12. Durch die Erwärmung wird der verstreckte Heißschmelzklebstoff 8 reaktiviert. Dabei löst sich die im vorangehenden Verfahrensschritt erzeugte netzartige Klebstoffstruktur 9 auf und der Heißschmelzklebstoff 8 zieht sich zu den Stegen 4 der Wabenstruktur hin zurück. In der Folge befindet sich somit kein Heißschmelzklebstoff 8 mehr in den Öffnungsbereichen der Zellen 5, vielmehr konzentriert sich der Heißschmelzklebstoff 8 ausschließlich im Bereich der Stege 4 der Wabenstruktur. Dieser Zustand ist in Figur 3 dargestellt.

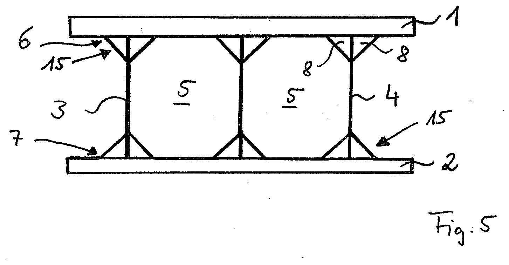

In einem darauf folgenden Verfahrensschritt wird, wie in Figur 4 dargestellt, die erste Deckschicht 1, welche hier als dünne MDF-Platte ausgebildet ist, in einer durch den Pfeil 13 angezeigten Richtung auf die mit Heißschmelzklebstoff 8 versehene erste Oberfläche 6 des Kernelements 3 aufgelegt und leicht aufgedrückt. Da sich der reaktivierte Heißschmelzklebstoff 8, wie unten im Zusammenhang mit Figur 5 noch näher ausgeführt werden wird, auch an seitliche Bereiche der Stege 4 anlegt, wird durch die lokal besonders hohe Klebstoffkonzentration im Bereich der Stege 4 eine besonders gute Verbindung zwischen der Deckschicht 1 und dem Kernelement 3 hergestellt. Das Aufdrücken der Deckschicht 1 muss dabei innerhalb der offenen Zeit des Heißschmelzklebstoffs 8 erfolgen. Da die eingetragene Wärme über die erste Deckschicht 1 sehr schnell abgeleitet wird, verfestigt sich der Heißschmelzklebstoff 8 unmittelbar und es kann auf weitere zeit- und energieaufwendige Trocknungsverfahren verzichtet werden.

In analoger Weise wird durch nochmaliges Ausführen der beschriebenen Verfahrensschritte auch die hier nicht dargestellte zweite Deckschicht 2 mit der hier nach unten gerichteten zweiten Oberfläche 7 des Kernelements 3 verbunden. Dazu wird in der oben beschriebenen Weise Heißschmelzklebstoff 8 auf die zweite Oberfläche 7 des Kernelements 3 aufgesprüht, so dass sich eine netzartige Klebstoffstruktur ausbildet. Nachfolgend wird die zweite Oberfläche 7 mit Hilfe von Heißdampf 11 erwärmt, so dass der Heißschmelzklebstoff 8 reaktiviert wird und sich in der oben beschriebenen Weise zu den Stegen 4 hin zurückzieht. Die zweite Deckschicht 2 kann sodann in einer durch den Pfeil 14 angezeigten Richtung auf die zweite Oberfläche 7 des Kernelements 3 aufgedrückt werden, so dass das Kernelement 3 abschließend zwischen den beiden Deckschichten 1, 2 angeordnet ist.

Figur 5 zeigt in einer Schnittdarstellung einen Ausschnitt aus einer mit Hilfe des erfindungsgemäßen Verfahrens hergestellten Wabenplatte. Man erkennt hier deutlich, dass sich der Heißschmelzklebstoff 8 zu den Stegen 4 des Kernelements 3 hin zurückzieht und sich insbesondere auch an seitliche Bereiche der Stege 4 anlegt und diese gewissermaßen einfasst, so dass im Bereich der Stege 4 insgesamt vergrößerte Kontaktbereiche 15 ausgebildet werden.

Durch das erfindungsgemäße Verfahren kann somit auf einfache Weise eine lokale Klebstoffkonzentration genau in den Bereichen der Wabenstruktur bereitgestellt werden, die auch tatsächlich zu der Verbindung beitragen. Gegenüber herkömmlichen Fügeverfahren werden größere Kontaktbereiche zwischen dem Kernelement 3 und den Deckschichten 1,2 ausgebildet, so dass bei insgesamt reduziertem Klebstoffeinsatz eine bessere Verbindung zwischen dem Kernelement 3 und den Deckschichten 1, 2 bewirkt werden kann.

Darüber hinaus zeichnet sich das erfindungsgemäße Verfahren dadurch aus, dass eine mit Hilfe dieses Verfahrens hergestellte Wabenplatte unmittelbar weiterverarbeitet werden kann, da aufgrund der kurzen Reaktionszeiten des Heißschmelzklebstoffs 8 auf zeit- und energieaufwendige Trocknungsverfahren verzichtet werden kann. Das erfindungsgemäße Verfahren eignet sich besonders zur Herstellung von Wabenplatten für die Möbelindustrie sowie zur Herstellung von Aluminiumleichtbauplatten.

## Patentansprüche

1. Verfahren zur Herstellung einer Wabenplatte, wobei die Wabenplatte eine erste Deckschicht (1) und eine zweite Deckschicht (2) sowie ein zwischen der ersten Deckschicht (1) und der zweiten Deckschicht (2) angeordnetes Kernelement (3) umfasst, wobei das Kernelement (3) eine Wabenstruktur mit von Stegen (4) begrenzten Zellen (5) aufweist und wobei das Kernelement (3) eine erste Oberfläche (6) aufweist, die an der ersten Deckschicht (1) anliegt und eine zweite Oberfläche (7) aufweist, die an der zweiten Deckschicht (2) anliegt, umfassend die folgenden Schritte:
i) Bereitstellen des Kernelements (3) sowie der ersten und der zweiten Deckschicht (1, 2);
ii) Aufsprühen eines Heißschmelzklebstoffs (8) auf mindestens eine Oberfläche (6, 7) des Kernelements (3), wobei der Heißschmelzklebstoff (8) während des Aufsprühens verstreckt wird, so dass sich eine netzartige Klebstoffstruktur (9) auf der mindestens einen Oberfläche (6, 7) des Kernelements (3) ausbildet;
iii) Erwärmen der mindestens einen mit Heißschmelzklebstoff (8) versehenen Oberfläche (6, 7) des Kernelements (3) und dadurch Reaktivieren des Heißschmelzklebstoffs (8);
iv) Aufdrücken einer Deckschicht (1, 2) auf die mindestens eine mit Heißschmelzklebstoff (8) versehene Oberfläche (6, 7) des Kernelements (3);
v) gegebenenfalls Ausführen der Verfahrensschritte ii) bis iv) für die zweite Oberfläche (7) des Kernelements (3) und die zweite Deckschicht (2), so dass das Kernelement (3) zwischen den beiden Deckschichten (1, 2) angeordnet ist.

2. Verfahren nach Anspruch 1, **dadurch gekennzeichnet, dass** der Heißschmelzklebstoff (8) durch Spinsprühen mit Hilfe einer druckluftbetriebenen Spiraldüse (10) auf die Oberflächen (6, 7) des Kernelements (3) aufgebracht wird.

3. Verfahren nach Anspruch 1 oder 2, **dadurch gekennzeichnet, dass** der Heißschmelzklebstoff (8) unter einem Winkel α von 30° bis 60°, vorzugsweise von etwa 45°, bezüglich der Oberflächen (6, 7) des Kernelements (3) aufgesprüht wird.

4. Verfahren nach einem der Ansprüche 1 bis 3, **dadurch gekennzeichnet, dass** ein reaktiver Heißschmelzklebstoff (8) verwendet wird.

5. Verfahren nach einem der Ansprüche 1 bis 4, **dadurch gekennzeichnet, dass** das Erwärmen der mindestens einen mit Heißschmelzklebstoff (8) versehenen Oberfläche (6, 7) des Kernelements (3) durch Heißluft und/oder durch Heißdampf (11) und/oder durch Infrarotstrahlung erfolgt.

6. Verfahren nach einem der Ansprüche 1 bis 5, **dadurch gekennzeichnet, dass** der Heißschmelzklebstoff (8) mit einem Flächengewicht von 30 bis 90 g/m² auf die Oberflächen (6, 7) des Kernelements (3) aufgesprüht wird.

7. Verfahren nach einem der Ansprüche 1 bis 6, **dadurch gekennzeichnet, dass** das Kernelement (3) ein Material auf Basis von Papier umfasst.

8. Verfahren nach einem der Ansprüche 1 bis 6, **dadurch gekennzeichnet, dass** das Kernelement (3) ein Material auf Basis von Aluminium umfasst.
